# EUROPÄISCHE PATENTSCHRIFT

(11) **EP 0 483 638 B1**
(45) Veröffentlichungstag und Bekanntmachung des Hinweises auf die Patenterteilung: **12.06.1996**
(21) Anmeldenummer: 91117945.5
(22) Anmeldetag: 22.10.1991
(51) Int. Cl.: C08F 220/58, C08F 226/04, C04B 24/26, C09K 7/02

(54) **Wasserlösliche Mischpolymerisate und deren Verwendung**
Water soluble copolymers and their use
Copolymères solubles dans l'eau et leur application

(30) Priorität: 31.10.1990 DE 4034642
(43) Veröffentlichungstag der Anmeldung: 06.05.1992
(73) Patentinhaber: HOECHST AKTIENGESELLSCHAFT, D-65926 Frankfurt am Main (DE)
(72) Erfinder: Hille, Martin, Dr., W-6237 Liederbach (DE); Wittkus, Heinz, W-6000 Frankfurt am Main (DE); Tonhauser, Jürgen, W-6227 Oestrich-Winkel (DE); Engelhardt, Fritz, Dr., W-6000 Frankfurt am Main (DE); Riegel, Ulrich, W-6000 Frankfurt am Main (DE)

(56) Entgegenhaltungen:
- EP-A- 0 023 712
- EP-A- 0 213 245
- EP-A- 0 311 799
- CHEMICAL ABSTRACTS, vol. 110, no. 14, 3. April 1989, Columbus, Ohio, US; abstract no. 115921H & JP-A-63 225 608

## Beschreibung

Die vorliegende Erfindung bezieht sich auf wasserlösliche Mischpolymerisate, Feststoffsuspensionen und wäßrige Lösungen, welche diese Mischpolymerisate enthalten, Verfahren zu deren Herstellung sowie deren Verwendung.

Bei Tiefbohrungen zur Erschließung von Erdöl- oder Erdgaslagerstätten ist die Verwendung von Bohrspülungen und Zementschlämmen seit langem bekannt. Bohrspülungen haben die Aufgabe, die erbohrten Gesteinssplitter und das sogenannte Bohrklein zutage zu fördern, den Meißel und das Bohrgestänge zu schmieren, poröse Gesteinsschichten abzudichten und durch hydrostatischen Druck den Lagerstättendruck zu kompensieren. Bohrspülungen müssen aus dem letztgenannten Grund ein erhöhtes spezifisches Gewicht besitzen. Dies erreicht man durch Zusatz von vorzugsweise Schwerspat, Salzen oder Tonen. Weitere wichtige Merkmale der Bohrspülungen sind Temperaturbeständigkeit und geeignete Fließeigenschaften, die von Elektrolyt-Konzentrationsänderungen nur wenig beeinflußt werden. Die verbreitetsten Additive zur Steuerung der Viskosität und des Wasserverlustes von Bohrspülungen sind Polymere wie Stärke, Carboxymethylcellulose und Carboxymethylhydroxyethylcellulose. Seit den fünfziger Jahren finden Copolymere des Typs Acrylamid/Acrylate vorwiegend in salzfreien Bohrspülsystemen Anwendung. In den siebziger Jahren wurden salzstabile Mischpolymere mit Monomeren entwickelt (US-Patente 3,629,101, 4,048,077, 4,309,523), welche Sulfogruppen enthalten und bis über 200 °C stabil sind.

Als Bohrlochflüssigkeiten bei Tiefbohrungen nach Erdöl oder Erdgas kommen ferner Zementschlämme und Komplettierungsflüssigkeiten zum Einsatz. Nachdem das Bohrloch eine bestimmte Tiefe erreicht hat, werden Eisenrohre, sog. Futterrohre, in das Bohrloch eingebracht, durch deren Hohlraum der Meißel zum Abbohren der nächst tieferen Gesteinsschichten geführt wird. Zu diesem Zweck müssen die Futterrohre fixiert werden, d.h. in den Hohlraum zwischen dem Gebirge und den Außenwänden der Futterrohre, den sogenannten Ringraum, muß ein Zementschlamm eingepumpt werden, der zu einem festen Gestein aushärtet. Der sich bildende Zementstein muß undurchlässig für Gase und Flüssigkeiten sein, damit kein Gas und/oder Öl aus der Trägerformation in andere Formationen oder bis zur Oberfläche fließen kann. An den zu verpumpenden Zementschlamm werden sehr hohe Anforderungen gestellt. Er soll gut pumpbar sein, d.h. möglichst niedrig viskos, und trotzdem keine Entmischung zeigen. Die Wasserabgabe des Zementschlamms an das poröse Gebirge soll niedrig sein, damit sich an der Bohrlochwand keine dicken Filterkuchen bilden, die den Pumpdruck aufgrund der Ringraumverengung so stark erhöhen würden, daß das poröse Gebirge aufreißt. Außerdem würde der Zementschlamm bei zu hoher Wasserabgabe nicht vollständig abbinden und für Gas und Öl durchlässig werden. Andererseits muß der sich bildende Zementmantel im Ringraum möglichst schnell bestimmte Festigkeiten erreichen, und beim Abbinden darf keine Schrumpfung auftreten, die zu Fließkanälen für Gas, Öl und Wasser führt. Eine optimale Einstellung der Zementschlammeigenschaften ist nur durch Additive möglich.

Die wichtigsten Additive zur Regulierung des Abbindens sind Verzögerer, Beschleuniger, Dispergatoren zur Verflüssigung und Wasserverlustreduzierer. Teilweise haben diese Additive mehr als eine Funktion. Dispergatoren wie Lignosulfonate und Polymethylennaphthalinsulfonate verzögern die Abbindung und setzen den Wasserverlust etwas herab. Manche Wasserverlustreduzierer verzögern die Abbindung und erhöhen drastisch die Viskosität.

Als wirksame Wasserverlustreduzierer von Zement- und Gipsschlämmen werden die verschiedensten Polymere, Mischpolymere und Kombinationen davon in der Praxis eingesetzt.
Die ersten gut wirksamen Produkte, die auch heute noch verwendet werden, sind Hydroxiethyl- und Carboxymethylhydroxiethylcellulose. Hydroxiethylcellulose hebt die Viskosität an und verzögert etwas die Abbindung. Carboximethylhydroxiethylcellulose verzögert stärker, was aber durch Beschleuniger ausgeglichen werden kann. Mit steigender Temperatur läßt die Wirkung der Celluloseether merklich nach. In der Folge wurden viele verschiedene vollsynthetische temperaturstabilere Polymere vorgeschlagen und sind in Anwendung.
Das US-Patent 3,994,852 beschreibt Polyvinylpyrrolidon-polyacrylamid-Copolymere, US-Patent 4,015,991 hydrolysierte Acrylamid-Acrylamidomethylenpropenylsulfonat-Copolymere, EP 0192447 Dimethylacrylamid-Acrylamidomethylenpropenylsulfonat-Copolymere und EP 0116671 Acrylamidomethylenpropenylsulfonat, Acrylamid (teilverseift) und Vinylamid-Terpolymere, die in Zementschlämmen zur Kontrolle des Wasserverlustes eingesetzt werden.

WO-A-90/12822 beschreibt Copolymere aus umgesättigten Carbonsäuren, Sulfonsäuren und kationischen Monomeren.

Es ist notwendig, den Zementschlamm jeweils mit dem am Bohrturm verfügbaren Zement und den Additiven den Anforderungen gemäß einzustellen.

Die Vielzahl der entwickelten Verbindungen macht deutlich, daß es stets problematisch ist, einen optimalen Zementschlamm zu formulieren. Bei durch den Typ der Zementation vorgegebenen Einzelparametern müssen die nötigen Eigenschaften mit Additiven auf akzeptable Werte eingestellt werden. Die hohe Zahl der entwickelten Verbindungen für die Reduzierung des Wasserverlustes zeigt an, wie problematisch es meist ist, eine geforderte Wasserabgabe einzustellen, ohne die Viskosität wesentlich zu erhöhen, die Abbindezeit gemäß Anforderung einzustellen und die Sedimentation zu minimieren. Die bisher bekannten wasserverlustreduzierenden Polymere erhöhen mehr oder weniger stark die Viskosität der Zementschlämme, welche zumeist eine hohe Dichte besitzen.
Für eine gute Verpumpbarkeit der Zementschlämme muß die Viskosität jedoch niedrig gehalten werden. Es soll eine Pumprate möglich sein, die eine turbulente Strömung ermöglicht. Nur unter diesen Bedingungen findet eine vollständige Verdrängung der Bohrspülung statt. Dies ist Voraussetzung für eine gute Zementation. Bei geneigten Bohrungen läßt sich die Spülung nur durch eine starke turbulente Strömung gut verdrängen.

Für die Fertigstellung (Komplettierung) von Erdöl- und Erdgassonden werden Salzlösungen hoher Dichte verwendet, die den Lagerstättendruck kompensieren. Dabei muß deren Infiltration in die Lagerstätte minimal gehalten werden. Hydroxiethylcellulosen sind jedoch für die dabei auftretenden Temperaturen bis über 200 °C und die hohen Salinitäten und Dichten mittels CaCl₂ und CaBr₂ nicht geeignet.

Der vorliegenden Erfindung liegt die Aufgabe zugrunde, Bohrlochflüssigkeiten wie Zementschlämme, Bohrspülungen und Komplettierungsflüssigkeiten zu entwickeln, die beim Kontakt mit porösen Schichten möglichst wenig Wasser an die Formation abgeben und eine niedrige Viskosität besitzen, so daß eine gute Verpumpbarkeit gewährleistet ist.

Diese Aufgabe wird gelöst durch wasserlösliche Mischpolymerisate, die zu 5 bis 90 Gew.-% aus Gruppen der Formel 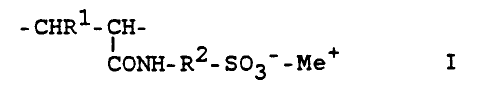
worin R¹ Wasserstoff oder Methyl, R² C₂-C₁₀-Alkylen, vorzugsweise C₂-C₆-Alkylen, insbesondere C₄-Alkylen, d.h. n-, iso- oder tert.-Butylen und Me Ammonium oder ein Alkalimetall bedeutet, zu '5-90 Gew.-% aus Gruppen der Formel 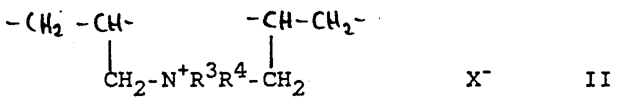
worin X ein Halogen, vorzugsweise Chlorid, R³ und R⁴ unabhängig voneinander C₁-C₆-Alkyl, vorzugsweise C₁-C₃-Alkyl, insbesondere Methyl oder Ethyl, bedeuten, und zu 5-60 Gew.-% aus Gruppen der Formel 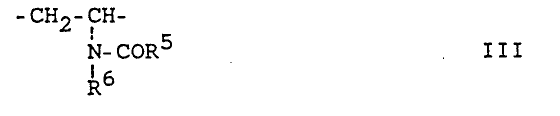
in der R⁵ und R⁶ unabhängig voneinander Wasserstoff, Methyl oder Ethyl oder R⁵ und R⁶ zusammen eine Propylengruppe, die unter Einschluß des Restes 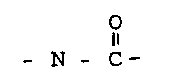
einen Pyrrolidonrest bildet, bedeutet, bestehen, und die Reihenfolge der Komponenten I bis III beliebig sein kann.

Besonders vorteilhaft für den anwendungstechnischen Zweck ist es, wenn das Mischpolymerisat eine Gruppe der Formel III enthält, in der die Reste R⁵, R⁶ und die Gruppe NCO den Pyrrolidonrest 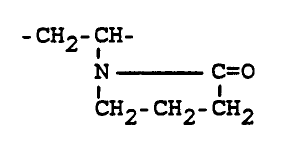
bilden.

Die beschriebenen Mischpolymerisate werden in Feststoffsuspensionen, z.B. in Zementschlämmen, Gipsschlämmen sowie Mörtel, Bohrspülungen und in analoger Weise in Pigmentsuspensionen sowie in wäßrigen, auch salinen Lösungen als Wasserbinder verwendet. In diesen Systemen läßt sich die Wasserabgabe an poröse Schichten durch den Zusatz der erfindungsgemäßen Mischpolymere stark reduzieren.

Die genannte Aufgabe wird somit ferner gelöst durch die Feststoffsuspension nach Anspruch 2, die wäßrige Lösung nach Anspruch 5 und die in den Ansprüchen 8 und 9 genannten Verwendungen.

In wäßrigen Feststoffsuspensionen sind Mischpolymerisate bevorzugt, die zu 40-80 Gew.-% aus Gruppen der Formel I, zu 10-50 Gew.-% der Formel II und zu 5-30 Gew.-% aus Gruppen der Formel III bestehen. Sie werden der Suspension in Konzentrationen von 0,1-4 Gew.-% zugesetzt, die Feststoffsuspensionen können 2-75 Gew.-% Feststoff enthalten.

In wäßrigen Lösungen sind Mischpolymerisate bevorzugt, die zu 40-90 Gew.-% aus Gruppen der Formel I und zu 10-60 Gew.-% der Formel II bestehen. Die Mischpolymerisate werden den wäßrigen Lösungen in Konzentrationen von 0,2-8 Gew.-% zugesetzt. Die wäßrigen Lösungen enthalten vorzugsweise CaCl₂ und/oder CaBr₂, wodurch ihre Dichte größer als 1 g/cm³, vorzugsweise 1,4-1,81 g/cm³, wird.

Als besonders geeignet haben sich Mischpolymere aus den Monomeren Acrylamido-N-methylenpropenylsulfonate (AMPS), Diallyldimethylammoniumchlorid (DADMAC), N-Vinyl-N-Methylacetamid (ViMA) und Acrylamid bzw. Acrylate (AM) erwiesen.

Die Molekulargewichte der erfindungsgemäßen Mischpolymere betragen 50.000-3.000.000, vorzugsweise 200.000-1.000.000 und sind in den Ausführungsbeispielen durch ihre Viskosität, angegeben in K-Werten nach Fikentscher (Cellulosechemie, 13, (1932), 58), charakterisiert.

Die erfindungsgemäßen, ampholytischen Mischpolymere stabilisieren den Wasserverlust und die Fließeigenschaften von Bohrspülungen bis über 200 °C auch in Gegenwart von zweiwertigen Ionen. Durch die Variation der Monomeranteile im Mischpolymer können sehr gezielt die Fließeigenschaften der Bohrschlämme beeinflußt werden. Die anionischen Gruppen wirken deflocculierend und die kationischen vernetzend mit den Tonteilchen, was die Thixotropie steigert.

Die der Erfindung zugrundeliegende Aufgabe wird ferner dadurch gelöst, daß man die Monomere der Formeln I bis III nach einem Verfahren der Lösungspolymerisation, Substanzpolymerisation, Emulsionspolymerisation, inversen Emulsionspolymerisation, Fällungspolymerisation oder Gelpolymerisation herstellt.

Vorzugsweise wird die Polymerisation als Lösungspolymerisation in Wasser oder als Fällungspolymerisation ausgeführt.

Bei der Durchführung der Copolymerisation in einem mit Wasser mischbaren organischen Lösungsmittel arbeitet man unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung des erfindungsgemäßen Herstellungsverfahrens geeignet sind, kommen insbesondere wasserlösliche Alkanole, nämlich solche mit 1 bis 4 C-Atomen wie Methanol, Ethanol, Propanol, Isopropanol, n-, sec- und iso-Butanol, vorzugsweise aber tert.-Butanol, in Betracht.

Der Wassergehalt der hierbei als Lösungsmittel eingesetzten niederen Alkanole sollte 6 Gew.-% nicht überschreiten, da sonst Klumpenbildung bei der Polymerisation auftreten kann. Vorzugsweise wird bei einem Wassergehalt von 0-3 Gew.-% gearbeitet.

Die Menge des einzusetzenden Lösungsmittels richtet sich bis zu einem gewissen Grad nach der Art der eingesetzten Comonomeren. In der Regel werden pro 100 g Gesamtmonomere 200 bis 1.000 g des Lösungsmittels eingesetzt.

Bei der Durchführung der Polymerisation in umgekehrter Emulsion wird die wäßrige Monomerenlösung in bekannter Weise in einem mit Wasser nicht mischbaren organischen Lösungsmittel wie Cyclohexan, Toluol, Xylol, Heptan oder hochsiedenden Benzinfraktionen unter Zusatz von 0,5 bis 8 Gew.-%, vorzugsweise 1 bis 4 Gew.-%, bekannter Emulgatoren vom W/O-Typ emulgiert und mit üblichen radikalbildenden Initiatoren polymerisiert.

Das Prinzip der inversen Emulsionspolymerisation ist aus der US-Patentschrift 3,284,393 bekannt. Bei diesem Verfahren werden wasserlösliche Monomere oder Mischungen davon in der Wärme zu hochmolekularen Copolymerisaten polymerisiert, indem man zunächst die Monomere oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomere können als solche in dem mit Wasser nicht mischbaren organischen Lösungsmittel emulgiert werden, oder sie können in Form einer wäßrigen Lösung, die zwischen 100 und 5 Gew.-% Comonomere und 0 bis 95 Gew.-% Wasser enthält, eingesetzt werden, wobei die Zusammensetzung der wäßrigen Lösung eine Frage der Löslichkeit der Comonomere in Wasser und der vorgesehenen Polymerisationstemperatur ist. Das Verhältnis zwischen Wasser und der Monomerenphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gew.-%, bezogen auf die Ölphase, eines Wasser-in-Öl-Emulgators zugesetzt. Vorzugsweise werden solche Emulgatoren verwendet, die einen relativ niedrigen HLB-Wert aufweisen. Der HLB-Wert ist ein Maß der Hydrophobie und Hydrophilie von Tensiden und Emulgatoren (Griffin, J. Soc. Cosmetic Chemists 1, (1950), 311). Substanzen mit niedrigem HLB-Wert, etwa unter 10, sind im allgemeinen gute Wasser-in-Öl-Emulgatoren.

Als Ölphase kann im Prinzip jede inerte wasserunlösliche Flüssigkeit, d.h. jedes hydrophobe organische Lösungsmittel, eingesetzt werden. Im allgemeinen verwendet man im Rahmen der vorliegenden Erfindung Kohlenwasserstoffe, deren Siedepunkt im Bereich von 120 bis 350 °C liegt. Diese Kohlenwasserstoffe können gesättigte, lineare oder verzweigte Paraffin-Kohlenwasserstoffe sein, wie sie in Erdölfraktionen vorwiegend vorliegen, wobei diese auch die üblichen Anteile von Naphthenkohlenwasserstoffen enthalten können. Es können aber auch aromatische Kohlenwasserstoffe wie beispielsweise Toluol oder Xylol sowie die Gemische der o.g. Kohlenwasserstoffe als Ölphase eingesetzt werden. Vorzugsweise verwendet man ein Gemisch aus gesättigten Normal- und Iso-Paraffinkohlenwasserstoffen, das bis zu 20 Gew.-% Naphthene enthält. Eine detaillierte Beschreibung des Verfahrens findet sich beispielsweise in der Deutschen Patentschrift 10 89 173 und in den US-Patentschriften 3,284,393 und 3,624,019.

Copolymerisate mit Molekulargewichten von über 1.000.000 werden erhalten, wenn man die Polymerisation in wäßriger Lösung nach dem Verfahren der sogenannten Gelpolymerisation durchführt. Dabei werden 15 bis 60 gew.-%ige Lösungen der Comonomere mit bekannten geeigneten Katalysatoren ohne mechanische Durchmischung unter Ausnutzung des Trommsdorff-Norrisch-Effekts (Bios Final Rep. 363,22; Macromol. Chem. 1, 169/1947) polymerisiert.

Die auf diesem Wege hergestellten, in Form wäßriger Gallerten vorliegenden erfindungsgemäßen Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die Polymerisationsreaktionen werden im Temperaturbereich zwischen -60 °C und 200 °C, bevorzugt zwischen 10 und 120 °C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.
Zur Auslösung der Polymerisation können energiereiche elektromagnetische oder korpuskulare Strahlen oder die üblichen chemischen Polymerisationsinitiatoren herangezogen werden, z.B. organische Peroxide wie Benzoylperoxid, tert. Butyl-hydroperoxid, Methylethylketon-peroxid, Cumol-hydroperoxid, Azoverbindungen wie Azo-di-iso-butyronitril oder 2'-Azo-bis-(2-amidinopropan)-dihydrochlorid sowie anorganische Peroxiverbindungen wie (NH₄)₂S₂O₈ oder K₂S₂O₈ oder H₂O₂ ggf. in Kombination mit Reduktionsmitteln wie Natriumhydrogensulfit und Eisen-II-Sulfat oder Redoxsysteme, welche als reduzierende Komponente eine aliphatische und aromatische Sulfinsäure wie Benzolsulfinsäure und Toluolsulfinsäure oder Derivate dieser Säuren, wie z.B. Mannichaddukte aus Sulfinsäure, Aldehyden und Amino-Verbindungen, wie sie in der Deutschen Patentschrift 13 01 566 beschrieben sind, enthalten. Pro 100 g Gesamtmonomere werden in der Regel 0,03 bis 2 g des Polymerisationsinitiators eingesetzt.

Den Polymerisationsansätzen werden gegebenenfalls kleine Mengen von sog. Moderatoren zugesetzt, die den Verlauf der Reaktion dadurch harmonisieren, daß sie das Reaktionsgeschwindigkeits-Zeitdiagramm abflachen. Sie führen damit zu einer Verbesserung der Reproduzierbarkeit der Reaktion und ermöglichen damit, einheitliche Produkte mit enger Molmassenverteilung und hoher Kettenlänge herzustellen. Beispiele für geeignete Moderatoren dieses Typs sind Nitrilo-tris-propionylamid oder Monoalkylamine, Dialkylamine oder Trialkylamine wie z.B. Dibutylamin. Auch bei der Herstellung der erfindungsgemäßen Copolymerisate können solche Moderatoren mit Vorteil verwendet werden. Weiterhin können den Polymerisationsansätzen sog. Regulatoren zugesetzt werden, die das Molekulargewicht der hergestellten Polymerisate durch einen gezielten Kettenabbruch einstellen. Brauchbare bekannte Regulatoren sind z.B. Alkohole wie Methanol, Ethanol, Propanol, Isopropanol, n-Butanol, sec. Butanol und Amylalkohole, Alkylmercaptane wie z.B. Dodecylmercaptan und tert. Dodecylmercaptan, Isooctylthioglycolat und einige Halogenverbindungen wie z.B. Tetrachlorkohlenstoff, Chloroform und Methylenchlorid.

Die Herstellung der Copolymere wird durch die Beispiele 1 bis 5 erläutert.

### Beispiel 1

In einem 1 l Polymerisationskolben, ausgerüstet mit Rührer, Thermometer, Rückflußkühler, Gaseinleitungsrohr und elektrisch beheiztem Wasserbad, werden
- 468,00 g: tert. Butanol (600 ml) vorgelegt und
- 65,00 g: Acrylamido-N-methylenpropenylsulfonat (AMPS) darin suspendiert. Über ein Gaseinleitungsrohr werden
- ca. 5,4 g: Ammoniak-Gas
eingeleitet, wobei eine schwach trübe Lösung entsteht. Der pH-Wert dieser Lösung muß größer als 7 sein, andernfalls muß mehr eingeleitet werden. Anschließend werden
- 20,00 g: N-Vinyl-N-methylacetamid (ViMA) und
- 25,00 g: Diallyldimethylammoniumchlorid (DADMAC) in Form einer 60 gew.-%igen wäßrigen Lösung zugegeben, und die Lösung wird unter Einleiten eines schwachen Stickstoffstromes auf eine Temperatur von 50-55 °C angeheizt. Nach Erreichen dieser Temperatur werden
- 1,00 g: Azodiisobutyronitril
zugegeben und die Rührgeschwindigkeit auf ca. 60 rpm gedrosselt. Die Polymerisation setzt nach wenigen Minuten ein, was an einem Ausflocken des Polymerisates sowie einem geringen Temperaturanstieg festzustellen ist. Im Verlauf von ca. 45 Min. entsteht ein dicker, gerade noch rührbarer Brei, und die Temperatur steigt bis auf ca. 75-80 °C an. Nach Erreichen des Temperaturmaximums wird 2 Stunden bei 80 °C nachgerührt, das Polymer anschließend abgesaugt und im Vakuumtrockenschrank bei 60 °C bis zur Gewichtskonstanz getrocknet. Man erhält 105 g weißes Pulver mit einem Schüttgewicht von ca. 0,3 kg/l und einem K-Wert nach Fikentscher von 162.

### Beispiel 2

In einem 2 l-Polymerisationskolben, ausgerüstet mit Rührer, Thermometer, Rückflußkühler und Gaseinleitungsrohr, werden
- 800,00 g: Trinkwasser
- 120,00 g: AMPS
- 50,00 g: Diallyldimethylammoniumchlorid, 60 Gew.-% wäßrig, unter Rühren nacheinander vorgelegt und durch Zugabe von
- 85,00 g: NaOH, 27 Gew.-%ig
auf einen pH-Wert größer als 7 eingestellt. Nach Zugabe von
- 50,00 g: N-Vinyl-N-methylacetamid
wird die Lösung unter Einleiten eines schwachen N₂-Stromes auf 40-45 °C angeheizt. Es werden
- 0,50 g: 2,2-Azobisamidinopropan-Dihydrochlorid zugegeben, worauf nach 5-10 Minuten die Polymerisation einsetzt, was an einem Viskositäts- und Temperaturanstieg zu erkennen ist. Nach Erreichen des Temperaturmaximums wird auf auf 80 °C angeheizt und 2 Std. unter diesen Bedingungen nachgerührt. Um ein besseres Handhaben der Polymerlösung im abgekühlten Zustand zu gewährleisten, werden
- 700,00 g: Trinkwasser zugegeben und unter Abkühlen auf 20 °C homogen verrührt. Man erhält eine leicht trübe, leicht gelbliche Lösung mit einem Feststoffgehalt von 11,5 Gew.-% und einem K-Wert nach Fikentscher von 195.

Tabelle 1 gibt eine Übersicht über die K-Werte weiterer Copolymere, die nach Herstellungsbeispiel 1 oder 2 synthetisiert wurden.

**Tabelle I**

| Herstellungsbeispiel | Synthese gemäß Herstellungsbeispiel | K-Wert | Monomerenzusammensetzung in Gew.-% | | | | |
|---|---|---|---|---|---|---|---|
| | | | AMPS | VIMA | VINPYR | DADMAC | Sonstige |
| 3 | 1 | 158 | 60 | 25 | | 15 | |
| 4 | 2 | 169 | 65 | 5 | | 30 | |
| 5 | 1 | 181 | 75 | | 10 | 15 | |
| 6 | 1 | 148 | 80 | | 5 | 15 | |
| 7 | 1 | 152 | 15 | 25 | | 60 | |

Die Anwendung der Copolymeren wird durch die nachfolgenden Beispiele näher erläutert.

Alle Prozentangaben sind Gewichtsprozente.

### 1. Tiefbohrzemente

Die Ausprüfung erfolgt nach der API spec. 10. Im atmosphärischen Chandler Konsistometer wird der Zementschlamm eine Stunde bei 93°C (200°F) gerührt und dann bei gleicher Temperatur die Rheologie mit dem Fann Viskosimeter Modell 35SA und der Wasserverlust mit der Baroid HT/HP Filterpresse gemessen.
Alle Teste wurden mit einem Zementschlamm der Dichte 1,87 kg/l durchgeführt. Er enthielt auf je 100 kg Tiefbohrzement G 44 l Wasser.

### Vergleichssubstanzen

### Beispiel VI

Carboxymethylhydroxyethylcellulose, DS = ca. 0,65, MS ca. 0,8
Scheinbare Viskosität einer 1 %igen Lösung in dest. Wasser: ca. 14 mPas mit Fann 35SA bei 600 rpm.

### Beispiel VII

Hydroxyethylcellulose, MS = ca. 2,4
Scheinbare Viskosität einer 1 %igen Lösung in dest. Wasser: ca. 10 mPas mit Fann 35SA bei 600 rpm.

### Beispiele VIII

Mischpolymerisat, bestehend aus
65 % Acrylamido-N-methylenpropenylsulfonsäure (AMPS)
15 % Acrylamid (AM)
20 % N-Vinyl-N-methylacetamid (ViMA)
K-Wert = 190, nach Fikentscher.

Erfindungsgemäße Mischpolymerisate, hergestellt nach Beispiel 1:

### Beispiel I

65 % AMPS
20 % ViMA
15 % Diallyldimethylammoniumchlorid (DADMAC)
K-Wert = 162

### Beispiel II

60 % AMPS
25 % ViMA
15 % DADMAC
K-Wert = 158

Erfindungsgemäße Mischpolymerisate, hergestellt nach Beispiel 2:

### Beispiel III

65 % AMPS
5 % ViMA
30 % DADMAC
K-Wert = 169

**Tabelle II**

| Beispiel (V= Vergleichsbeispiel) | g Produkt auf 100 g Zement | g Dispergator | Scheinbare Viskosität nach Fann bei 600 rpm in mPas | Wasserverlust in cm³ API spec. 10, 325 mesh 1000 psi |
|---|---|---|---|---|
| VI | a) 0,5 | 0,5 | 62 | 81 |
| | b) 0,75 | 0,75 | 112 | 64 |
| VII | a) 0,5 | 0,5 | 64 | 106 |
| | b) 0,75 | 0,75 | 118 | 78 |
| VIII | 0,5 | 0,5 | 107 | 70 |
| | 0,75 | 1,0 | >150 | 58 |
| I | a) 0,5 | 0,5 | 78 | 60 |
| | b) 0,75 | 1,0 | 86 | 44 |
| II | 0,5 | 0,5 | 59 | 58 |
| | 0,75 | 1,0 | 78 | 45 |
| III | 0,5 | 0,5 | 76 | 62 |

Die Beispiele zeigen die Überlegenheit der erfindungsgemäßen Mischpolymere.

Gegenüber Cellulosepolymeren wie CMHEC und HEC (Beispiel VI und VII) erniedrigen sie den Wasserverlust effizienter. Eine höhere Einsatzmenge an Cellulosepolymeren senkt den Wasserverlust weiter, erhöht aber drastisch die Viskosität.

Im Vergleich mit Mischpolymeren gemäß EP 016 671 (Beispiel VIII) lassen sich mit den erfindungsgemäßen Produkten Zementschlämme mit einem niedrigen Wasserverlust formulieren, welche eine erheblich niedrigere Viskosität besitzen.

Zementschlämme geringer Viskosität und niedrigen Wasserverlustes gewährleisten eine gute Zementation. Die niedrige Viskosität ermöglicht dann hohe Turbulenzen, die besonders in geneigten Segmenten des Bohrlochs für eine vollständige Verdrängung der Spülung nötig sind.

### 2. Bohr- und Gipsschlamm, Salzlösung

Die Ausprüfung erfolgt mit einer Filterpresse gemäß API Code 29. In diesem Fall wird die Filtrationsmenge in 30 Minuten durch eine Filterfläche von 45,8 ± 0,7 cm² bei einem Differenzdruck von 7 ± 0,7 bar gemessen.

### a. Bohrspülung

Eine 4 gew.-%ige Bentonitsuspension enthält 10 g/Ltr. Mischpolymer gemäß Herstellungsbeispiel 6.

Die Filtratmenge wird zuerst bei 20°C, nach Alterung von 15 h, bei 150 und 200°C und erneut bei 20°C gemessen.

### b. Gipsschlamm

Eine Aufschlämmung von 350 g CaSO₄ in 150 g Wasser wird mit 15 g/Ltr. Mischpolymer gemäß Herstellungsbeispiel 6 homogen verrührt und bei 20°C gemessen.

### c. Salzlösung

Eine Salzlösung mit der Dichte von 1,8 g/cm³ auf Basis CaBr₂ (19,2 Gew.-%) und CaCl₂ (15,2 Gew.-%) enthält 50 g/l Mischpolymer gemäß Herstellungsbeispiel 7 und wird bei 20°C, nach der Alterungszeit von 15 h bei 100 und 150°C erneut bei 20°C gemessen.

### Ergebnisse

| Zu a. Bohrspülung | | | |
|---|---|---|---|
| | ohne Alterung | nach 15 h bei 150°C | nach 15 h bei 200°C |
| Wasserverlust (cm³) | 8,5 | 9,2 | 10,0 |

| Zu b. Gipsschlamm | | | |
|---|---|---|---|
| Wasserverlust: | 7,2 cm³ | | |

| Zu c. Salzlösung | | | |
|---|---|---|---|
| | ohne Alterung | nach 15 h bei 100°C | nach 15 h bei 150°C |
| Wasserverlust (cm³) | 23,0 | 10,5 | 11,0 |

Die Ergebnisse zeigen, daß die erfindungsgemäßen Verbindungen den Wasserverlust von Bohrspülungen bis über 200°C stabilisieren. Sie reduzieren auch stark die Wasserabgabe von nicht kolloidalen Feststoffsuspensionen, wie das Ergebnis mit dem Gipsschlamm demonstriert. Auch bei Salzlösungen mit hohen Salinitäten und Temperaturen von 150°C reduzieren die erfindungsgemäßen Verbindungen den Wasserverlust sehr effektiv. Unter diesen Bedingungen sind Hydroxiethylcellulosen nicht geeignet.

## Patentansprüche

1. Wasserlösliches Mischpolymerisat, dadurch gekennzeichnet, daß es zu 5-90 Gew.-% aus Gruppen der Formel 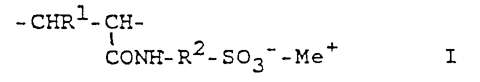 worin R¹ Wasserstoff oder Methyl, R² C₂-C₁₀-Alkylen, vorzugsweise C₂-C₆-Alkylen, insbesondere C₄-Alkylen, und Me Ammonium oder ein Alkalimetall bedeutet, zu 5-90 Gew.-% aus Gruppen der Formel 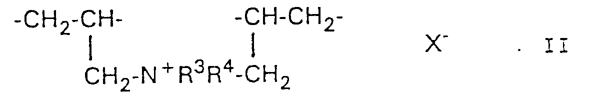 worin X ein Halogen, vorzugsweise Chlorid, R³ und R⁴ unabhängig voneinander C₁-C₆-Alkyl, vorzugsweise C₁-C₃-Alkyl, insbesondere Methyl oder Ethyl, bedeuten, und zu 5-60 Gew.-% aus Gruppen der Formel 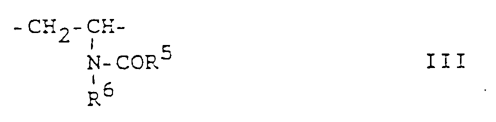 besteht, in der R⁵ und R⁶ unabhängig voneinander Wasserstoff, Methyl oder Ethyl oder R⁵ und R⁶ zusammen eine Propylengruppe, die unter Einschluß des Restes 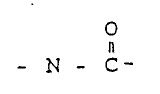 einen Pyrrolidonrest bildet, bedeutet, und die Reihenfolge der Komponenten I bis III beliebig sein kann.

2. Feststoffsuspension, dadurch gekennzeichnet, daß sie ein Mischpolymerisat gemäß Anspruch 1 enthält, vorzugsweise ein solches Mischpolymerisat, das zu 40-80 Gew.-% aus Gruppen der Formel I, zu 10-50 Gew.-% aus Gruppen der Formel II und zu 5-30 Gew.-% aus Gruppen der Formel III besteht.

3. Feststoffsuspension gemäß Anspruch 2, dadurch gekennzeichnet, daß sie 0,1-4 Gew.-% des Mischpolymerisats enthält.

4. Feststoffsuspension gemäß den Ansprüchen 2 oder 3, dadurch gekennzeichnet, daß sie 2-75 Gew.-% Feststoff enthält.

5. Wäßrige Lösung, dadurch gekennzeichnet, daß sie ein Mischpolymerisat gemäß Anspruch 1 enthält,

6. Wäßrige Lösung gemäß Anspruch 5, dadurch gekennzeichnet, daß sie 0,2-8 Gew.-% des Mischpolymerisats enthält.

7. Wäßrige Lösung gemäß den Ansprüchen 5 oder 6, dadurch gekennzeichnet, daß sie durch ihren Gehalt an CaCl₂ und CaBr₂ eine Dichte größer als 1 g/cm³, vorzugsweise von 1,4-1,81 g/cm³ besitzt.

8. Verwendung des Mischpolymerisats gemäß Anspruch 1 als wasserbindendes Additiv für Feststoffsuspensionen, vorzugsweise für Zementschlämme, Gipsschlämme, Mörtel, Bohrspülungen oder Pigmentsuspensionen.

9. Verwendung des Mischpolymerisats gemäß Anspruch 1 als wasserbindendes Additiv für wäßrige Salzlösungen.

10. Verfahren zur Herstellung des Mischpolymerisats gemäß Anspruch 1 nach einem Verfahren der Lösungspolymerisation, Substanzpolymerisation, Emulsionspolymerisation, inversen Emulsionspolymerisation, Fällungspolymerisation oder Gelpolymerisation, vorzugsweise als Lösungspolymerisation in Wasser oder als Fällungspolymerisation.

## Claims

1. A water-soluble copolymer comprising 5-90% by weight of groups of the formula 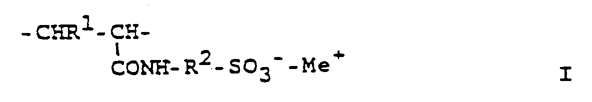 in which R¹ is hydrogen or methyl, R² is C₂-C₁₀-alkylene, preferably C₂-C₆-alkylene, in particular C₄-alkylene, and Me is ammonium or an alkali metal, 5-90% by weight of groups of the formula 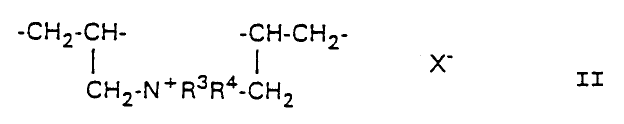 in which X is a halogen, preferably chloride, R³ and R⁴, independently of one another, are C₁-C₆-alkyl, preferably C₁-C₃-alkyl, in particular methyl or ethyl, and 5-60% by weight of groups of the formula 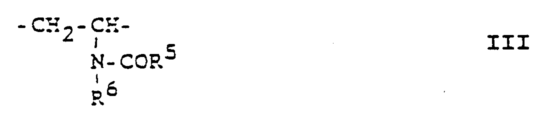 in which R⁵ and R⁶, independently of one another, are hydrogen, methyl or ethyl or R⁵ and R⁶ together are a propylene group which with inclusion of the radical 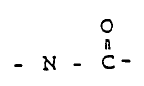 forms a pyrrolidone radical, and the order of components I to III can be as desired.

2. A solid suspension comprising a copolymer as claimed in claim 1, preferably such a copolymer comprising 40-80% by weight of groups of the formula I, 10-50% by weight of groups of the formula II and 5-30% by weight of groups of the formula III.

3. A solid suspension as claimed in claim 2, which contains 0.1-4% by weight of the copolymer.

4. A solid suspension as claimed in claim 2 or 3, which contains 2-75% by weight of solid.

5. An aqueous solution comprising a copolymer as claimed in claim 1.

6. An aqueous solution as claimed in claim 5, which contains 0.2-8% by weight of the copolymer.

7. An aqueous solution as claimed in claim 5 or 6, which by virtue of its CaCl₂ and CaBr₂ content has a density of greater than 1 g/cm³, preferably of 1.4-1.81 g/cm³.

8. Use of a copolymer as claimed in claim 1 as water-binding additive for suspensions of solids, preferably for cement slurries, gypsum slurries, mortars, drilling muds or pigment suspensions.

9. Use of a copolymer as claimed in claim 1 as water-binding additive for aqueous salt solutions.

10. A process for the preparation of a copolymer as claimed in claim 1 by a process of solution polymerization, bulk polymerization, emulsion polymerization, inverse emulsion polymerization, precipitation polymerization or gel polymerization, preferably as solution polymerization in water or as precipitation polymerization.

## Revendications

1. Copolymère soluble dans l'eau, caractérisé en ce qu'il est constitué de 5 à 90 % en masse de groupes de formule 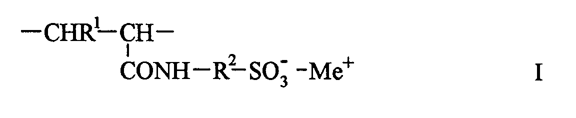 dans laquelle R¹ représente un atome d'hydrogène ou un reste méthyle, R² est un reste alkylène en C₂-C₁₀, de préférence alkylène en C₂-C₆, en particulier alkylène en C₄, et Me est un ammonium ou un métal alcalin, de 5 à 90 % en masse de groupes de formule 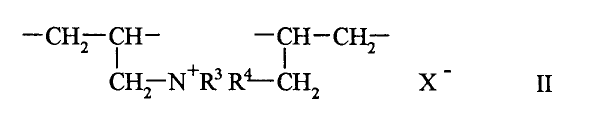 dans laquelle X représente un halogène, de préférence un chlorure, R³ et R⁴ représentent indépendamment l'un de l'autre un reste alkyle en C₁-C₆, de préférence alkyle en C₁-C₃, en particulier un reste méthyle ou éthyle, et 5 à 60 % en masse de groupes de formule 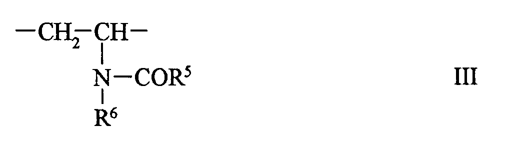 dans laquelle R⁵ et R⁶ représentent indépendamment l'un de l'autre un atome d'hydrogène ou un groupe méthyle ou éthyle, ou bien R⁵ et R⁶ représentent ensemble un groupe propylène qui forme avec le reste 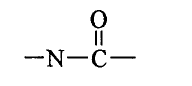 un reste pyrrolidone, et l'ordre des constituants I à III peut être quelconque.

2. Suspension de matières solides, caractérisée en ce qu'elle contient un copolymère selon la revendication 1, de préférence un tel copolymère constitué de 40 à 80 % en masse de groupes de formule I, de 10 à 50 % en masse de groupes de formule II et de 5 à 30 % en masse de groupes de formule III.

3. Suspension de matières solides selon la revendication 2, caractérisée en ce qu'elle contient 0,1 à 4 % en masse du copolymère.

4. Suspension de matières solides selon les revendications 2 ou 3, caractérisée en ce qu'elle contient 2 à 75 % en masse de matières solides.

5. Solution aqueuse, caractérisée en ce qu'elle contient un copolymère selon la revendication 1.

6. Solution aqueuse selon la revendication 5, caractérisée en ce qu'elle contient 0,2 à 8 % en masse du copolymère.

7. Solution aqueuse selon les revendications 5 ou 6, caractérisée en ce que, du fait de sa teneur en CaCl₂ et CaBr₂, elle a une densité supérieure à 1 g/cm³, de préférence de 1,4 à 1,81 g/cm³.

8. Utilisation du copolymère selon la revendication 1 comme additif fixant l'eau pour des suspensions de matières solides, de préférence pour des bouillies de ciment, des bouillies de plâtre, des mortiers, des fluides de forage ou des suspensions de pigments.

9. Utilisation du copolymère selon la revendication 1 comme additif fixant l'eau pour des solutions aqueuses de sels.

10. Procédé de préparation du copolymère selon la revendication 1 suivant un procédé de polymérisation en solution, de polymérisation en masse, de polymérisation en émulsion, de polymérisation en émulsion inverse, de polymérisation avec précipitation ou de polymérisation en gel, de préférence suivant un procédé de polymérisation en solution dans l'eau ou de polymérisation avec précipitation.
